# EUROPEAN PATENT APPLICATION

(11) **EP 4 299 335 A1**
(43) Date of publication of application: **03.01.2024**
(21) Application number: 22305959.3
(22) Date of filing: 30.06.2022
(51) Int. Cl.: B43K 1/08, B43K 7/00, C09D 11/16

(54) **HIGH LAYDOWN WRITING TOOL DISPENSING A PIGMENTED NON-AQUEOUS INK**

(71) Applicant: Société BIC, 92110 Clichy (FR)
(72) Inventor: CAFFIER, Guillaume, 92 110 Clichy (FR); RENAUD, Alexis, 92 110 Clichy (FR)
(74) Representative: Peterreins Schley

(57) **Abstract**

The present disclosure relates to a handheld writing instrument comprising a non-aqueous writing ink which comprises, relative to the total weight of writing ink: about 5 to about 25 wt.-%, of at least one pigment, about 5 to about 35 wt.-% of one or more resins, a gelling agent comprising one or more of: a mixture of silica particles and of a fatty acid amide wax, water-insoluble cellulose nanofibers, and one or more solvents; wherein the handheld writing instrument comprises a writing tip which is configured to dispense between about 50 and about 100 mg ink per 150 m of writing line; wherein the writing ink has a viscosity at rest at about 20 °C of between about 15 000 cps and about 150 000 cps and a viscosity under shear at about 100 s⁻¹ at about 20 °C of between about between about 1200 cps and about 10000 cps; and wherein the pigment has a D50 particle size of between about 80 nm and about 700 nm.

## Description

### Field of the Present Disclosure

The present disclosure concerns the field of writing instruments, in particular pens such as ball-pens, and writing inks for use in such writing instruments.

### Background of the Present Disclosure

Today, non-aqueous ball pen inks on the market are predominantly colored with dyes. The reason for this is that dyes are soluble in the non-aqueous solvents and, thus, no settlement happens during ageing. These dye-based inks are also satisfactory in that they have good vividness and intensity. However, the main drawback of dyes is their poor chemical and light resistance, meaning that the writing quite easily falsifiable by e.g. strong UV radiation or use of strong solvents.

The best way to obtain documentary proof inks is to color them with pigments. Pigments are difficult to destroy and, being insoluble, after writing, they enter deeply in paper fibers and are very difficult to remove. This makes the writing very difficult to falsify and to erase. Commercially relevant pigmented inks exist, but only on aqueous basis. The reason for this is that it is important to avoid settlement of the pigments in the ink during storage. In water, pigments are quite easy to stabilize in dispersion. There are two principal mechanisms for the stabilization of pigmented dispersions: Electrostatic stabilization and steric stabilization. Electrostatic stabilization occurs when equally-charged local sites on the pigment surface come into contact with one another. Two particles having the same charges give a repelling effect. The resulting Coulomb-repulsion of the charged particles allows the pigment dispersion to remain stable. In steric stabilization, the pigment can be sterically stabilized when the surface of the solid particles is covered by polymers, making particle-to-particle contact difficult. Unfortunately, both electrostatic stabilization and steric stabilization work poorly in non-aqueous ink systems. This explains why commercially relevant pigmented inks are on aqueous basis.

Aqueous pigmented ball pen inks have their own technical issues, the most prominent one being that water is an easily evaporable solvent. There are measures available for reducing the drying of the ink such as use of point protection or followers in the ink barrel, but these measures add to the cost of the pen. Moreover, drying of ink on the ballpoint may lead to build-up of dried ink on the writing tip and smearing.

Therefore, there is a continued need for writing instruments dispensing inks which reduce or avoid one or more of the aforementioned issues.

### Summary of the Present Disclosure

In a first aspect, the present disclosure relates to a handheld writing instrument comprising a non-aqueous writing ink which comprises, relative to the total weight of writing ink: about 5 to about 25 wt.-%, of at least one pigment; about 5 to about 35 wt.-% of one or more resins; a gelling agent comprising one or more of: a) a mixture of silica particles and of a fatty acid amide wax, b) water-insoluble cellulose nanofibers; and one or more solvents; wherein the handheld writing instrument comprises a writing tip which is configured to dispense between about 50 and about 100 mg ink per 150 m of writing line; wherein the writing ink has a viscosity at rest at about 20 °C of between about 15 000 cps and about 150 000 cps and a viscosity under shear at about 100 s⁻¹ at about 20 °C of between about between about 1200 cps and about 10000 cps; and wherein the pigment has a D50 particle size of between about 80 nm and about 700 nm.

In some embodiments, the writing tip comprises a writing ball held within the writing tip and wherein a gap between the writing tip and the writing ball is between about 700 nm and about 3000 nm, more specifically between about 800 nm and about 2500 nm and in particular between about 1000 nm and about 2000 nm.

In some embodiments, the non-aqueous writing ink comprises a pigment having acidic surface groups, in particular a carbon-black based pigment.

In some embodiments, acidic functional groups are grafted onto the pigment or are part of a (polymeric) compound which is coated onto the pigment surface.

In some embodiments, the pigment has a D50 particle size of between about 100 nm and about 500 nm, in particular between about 120 nm and about 350 nm.

In some embodiments, the pigment has a D90 particle size of less than about 1200 nm, more specifically less than about 1000 nm and in particular less than about 900 nm.

In some embodiments, the gelling agent comprises a mixture of silica particles and of a fatty acid amide wax and the fatty acid amide wax is present in amounts of between about 0.05 and about 1 wt.-%, more specifically between about 0.08 and about 0.5% wt.-%, and in particular between about 0.1 and about 0.3% wt.-%; and/or the silica particles are present in amounts between about 0.02 and about 1 wt.-%, more specifically between about 0.05 and about 0.7 wt.-%, and in particular between about 0.1 and about 0.5 wt.-%; relative to the total weight of the ink.

In some embodiments, the gelling agent comprises a mixture of hydrophilic silica particles and of a fatty acid amide wax and the fatty acid amide wax is present in amounts of between about 0.05 and about 1 wt.-%, more specifically between about 0.08 and about 0.5% wt.-%, and in particular between about 0.1 and about 0.3% wt.-%; and/or the hydrophilic silica particles are present in amounts between about 0.02 and about 1 wt.-%, more specifically between about 0.05 and about 0.7 wt.-%, and in particular between about 0.1 and about 0.5 wt.-%; relative to the total weight of the ink.

In some embodiments, the fatty acid amide wax comprises an N,N'-ethylene-bis-fatty acid amide, in particular an octadecanamide of the following formula (I)

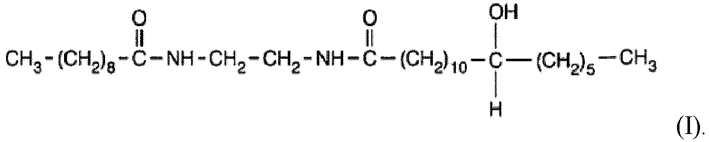

In some embodiments, the gelling agent comprises water-insoluble cellulose nanofibers in amounts of between about 0.02 and about 0.5 wt.-%, more specifically between about 0.05 and about 0.25 wt.-%, and in particular between about 0.07 and about 0.2 wt.-%, relative to the total weight of the ink.

In some embodiments, the water-insoluble cellulose nanofibers comprise fibers having a diameter of less than about 1000 nm, more specifically less than about 800 nm, and in particular less than about 500 nm, and/or having an aspect ratio of at least about 5, more specifically at least about 8, and in particular at least about 10.

In some embodiments, the water-insoluble cellulose nanofibers comprise fibers having a length of at least about 3 µm, more specifically at least about 5 µm, and in particular at least about 8 µm.

In some embodiments, the water-insoluble cellulose nanofibers comprise fibers having a diameter of more than about 10 nm, more specifically more than about 20 nm, and in particular more than about 30 nm.

In some embodiments, the water-insoluble cellulose nanofibers comprise fibers which form a network, in particular a three-dimensional network of entangled fibers.

In some embodiments, the water-insoluble cellulose nanofibers do not comprise 2,2,6,6-tetramethylpiperidine-1-oxyl radical- (TEMPO)-mediated or otherwise oxidized cellulose and do not comprise cellulose derivatives functionalized with an ether moiety, in particular methyl- and ethylcellulose, hydroxypropylcellulose and carboxymethylcellulose.

In some embodiments, the one or more solvents comprises a polar solvent, in particular a polar solvent selected from the group consisting of glycol ethers, alcohols, and mixture thereof; more specifically wherein the solvent is a polyethylene glycol ether, a polypropylene glycol ether, phenoxyethanol, 1-phenoxy-2-propanol, or mixtures thereof.

In some embodiments, the one or more solvents comprises phenoxyethanol and/or 1-phenoxy-2-propanol.

In some embodiments, the one or more solvents is present in amounts of between about 25 and about 80 wt.-%, more specifically between about 45 and about 75 wt.-%, and in particular between about 48 and about 65 wt.-%, relative to the total weight of the ink.

In some embodiments, the one or more resins comprises a resin selected from polyester resins, polyurethane resins, ketone resins, ketone-formaldehyde resins, ether resins, vinyl resins, polyvinyl alcohols, acrylic resins, styrene-acrylic resins, styrene-maleic acid copolymer resins, rosin-maleic acid copolymer resins, phenol resins, cellulosic resins, amid resins, alkyd resins, rosin modified resins, rosin modified phenol resins, xylene resins, polyacetal resins, terpene resins, phenoxy resins or a mixture thereof.

In some embodiments, the one or more resins comprises a ketone resin.

In some embodiments, the one or more resins is present in an amount of between about 5 and about 35 wt.-%, in particular of between about 7 and about 25 wt.-%, and in particular between about 10 to about 20 wt.-%, relative to the total weight of the ink.

In some embodiments, the non-aqueous writing ink comprises a homo or copolymer of vinylpyrrolidone, in particular polyvinylpyrrolidone, and in particular wherein the homo or copolymer of vinylpyrrolidone is present in amounts of between about 0.02 and about 1.5 wt.-%, more specifically between about 0.03 and about 0.8 wt.-%, and in particular between about 0.05 and about 0.5 wt.-%, relative to the total weight of the ink. In some embodiments, it may be particularly advantageous that the copolymer of vinylpyrrolidone, in particular a polyvinylpyrrolidone, has a weight-average molecular weight of above about 200 kDa, specifically between about 400 and about 2300 kDa, more specifically between about 450 and about 2000 kDa, and in particular between about 600 and about 1900 kDa.

In some embodiments, the non-aqueous writing ink further comprises one or more additives, in particular one or more additives selected from the group consisting of thickening agents, clear drain agents, viscosity imparting agents, lubricants, dispersing agents and mixture thereof.

In some embodiments, the writing instrument comprises a ball-point at the writing tip having a size of about 0.5 mm or more, in particular 0.7 mm or more, and in particular 1.0 mm or more.

In some embodiments, the non-aqueous writing ink comprises one or more dispersing agents. In some embodiments, the non-aqueous writing ink (further) comprises a polymeric dispersing agent.

In some embodiments, the polymeric dispersing agent is configured to aggregate on the surface of the pigment, in particular by ion-ion interaction and/or formation of hydrogen bridges.

In some embodiments, it may be particularly advantageous that the non-aqueous writing ink comprises a mixture of two or more dispersing agents, wherein said mixture comprises a polymeric dispersing agent and a non-polymeric dispersing agent.

In a second aspect of the present disclosure, there is provided a non-aqueous writing ink which comprises, relative to the total weight of writing ink: about 5 to about 25 wt.-%, of at least one pigment; about 5 to about 35 wt.-% of one or more resins; a gelling agent comprising one or more of: a) a mixture of silica particles and of a fatty acid amide wax, b) water-insoluble cellulose nanofibers; and one or more solvents; wherein the writing ink has a viscosity at rest at about 20 °C of between about 15 000 cps and about 150 000 cps and a viscosity under shear at about 100 s⁻¹ at about 20 °C of between about between about 1200 cps and about 10000 cps; and wherein the pigment has a D50 particle size of between about 80 nm and about 700 nm.

### Description of the Figures

Fig. 1 shows a SEM image on glass plate of exemplary water-insoluble cellulose nanofibers that is employable according to the present disclosure
Fig. 2 shows a SEM image of TEMPO-oxidized cellulose nanofibers.

### Detailed Description of the Present Disclosure

Hereinafter, a detailed description will be given of the present disclosure. The terms or words used in the description and the claims of the present disclosure are not to be construed limitedly as only having common-language or dictionary meanings and should, unless specifically defined otherwise in the following description, be interpreted as having their ordinary technical meaning as established in the relevant technical field. The detailed description will refer to specific embodiments to better illustrate the present disclosure, however, it should be understood that the presented disclosure is not limited to these specific embodiments.

The present disclosure provides a handheld writing instrument which dispenses a non-aqueous pigment-based writing ink. Being based on a non-aqueous writing ink, the writing instrument is less subject to issues of ink drying due to solvent evaporation, such as build-up of dried ink on the writing ink and smearing caused by dried ink agglomerations. Due to its high-laydown characteristics, the writing instrument of the present disclosure provides a vivid intense color impression despite the use of pigments as coloring agents. Pigments have much less coloring power than dyes conventionally used in non-aqueous ball pen inks. This means that with a low laydown writing tips, even with high a pigment load in the writing ink, and even with use of very dark pigments such as high specific surface carbon black, writing traces would not be dark/vivid enough. Moreover, very high pigment loadings do result in formulation difficulties such as poor dispersion stability and poor rheology and writing performance. The present disclosure addresses this issue by relying on a writing instrument which has a high laydown and, thus, allows to use specifically formulated inks having lower pigment loadings. The ink is specifically adapted to these conditions by using extremely finely dispersed pigment particles and adjusting the rheology such that a stable dispersion of the pigment particles and yet a smooth writing experience is realized. The present inventors have surprisingly found that the specific rheology modifiers disclosed further below in this disclosure are particularly suited for meeting these requirements by providing a non-Newtonian viscosity suitable for a high laydown writing instrument. Being very viscous at rest, the ink is resistant to seepage and back leak. This property facilitates its use in high laydown ball-points with their relatively large gaps/openings for dispensing the ink. Together with the small pigment sizes, it also helps in avoiding pigment settlement and clogging of the writing ball points. The relatively low viscosity under shear facilitates reliably and uninterruptedly dispensing the high amount of ink and facilitates providing a smooth writing feeling. Moreover, it was found that the writing ink maintains its viscosity (under shear) and also the particle size (e.g. D50 value) of the pigment remain stable over time, in particular for at least 1 month and specifically for at least 6 months. Besides storage stability, this is also helpful in reducing clogging and caking of the writing instrument.

Accordingly, in a first aspect, the invention of the present disclosure relates to a handheld writing instrument, in particular ballpoint pens. The design of the writing instrument is not particularly limited but comprises a writing tip which is configured to dispense between about 50 and about 100 mg ink per 150 m of writing line. In other words, the writing instrument is a high laydown writing instrument. In e.g. ballpoint pens, a high laydown can be realized by providing a relatively large gap between the writing ball and the writing tip (specifically the socket for housing the writing ball). The laydown may be measured over a length of 150 m (hundred and fifty meter) on a performance testing paper complying with ISO 12757-1 : 2017 under standard test atmosphere of 23 °C (twenty three degrees Celsius) and 50% (fifty percent) relative humidity, with a point load of 1.5 N ± 0.1 N (one Newton and an half plus or minus one tenth of Newton), a writing angle of 75° ± 5° (seventy five degrees plus or minus five degrees), and writing speed of 4.5 m/min ± 0,5 m/min (four meters and an half per minute plus or minus half a meter per minute), as per ISO 12757-1 : 2017. A writing test machine such as those by Mikron^{®}, Minitec^{®}, Hutt^{®} or any other specialized manufacturers may be used. For example, the writing test machine may be a Mikron^{®} ATW-10 WRI no K14A1.1031A manufactured in 2012, but not necessarily. The total weight of the writing instrument assembly (writing instrument + support + adjusting weights) between about 140 to about 160g.

In some embodiments, the writing tip comprises a writing ball held within the writing tip and wherein a gap between the writing tip and the writing ball is between about 700 nm and about 3000 nm, more specifically between about 800 nm and about 2500 nm and in particular between about 1000 nm and about 2000 nm.

The writing instrument contains a non-aqueous writing ink. In this context, non-aqueous means that the ink does not comprise water as a solvent and/or may be substantially free (e.g. containing less than about 2 wt.-% with respect to the total weight of the ink) or free of water.

For the purposes of the present disclosure, the term "writing ink" is intended to mean any ink which is intended to be used in a writing instrument, in particular in a pen such as a ball-point pen. A writing ink should not be confused with a printing ink which is used in printing machines and which does not have the same technical constraints and thus the same specifications.

The non-aqueous writing ink comprises a gelling agent comprising one or more of a) a mixture of silica particles and of a fatty acid amide wax, and b) water-insoluble cellulose nanofibers; a pigment, a resin, and one or more solvents. The individual components will be discussed in the following:
First, the gelling agent is described.

In some embodiments, the gelling agent may be present in amounts of between about 0.1 and about 1.2 wt.-%, more specifically between about 0.15 and about 0.60 wt.-%, relative to the total weight of the ink.

In some embodiments, the gelling agent may comprise a mixture of silica particles and of a fatty acid amide wax.

In some embodiments, the silica particles may comprise hydrophilic silica particles.

In some embodiments, it may be advantageous that the silica particles are fumed silica particles, in particular hydrophilic fumed silica particles, such as the product sold by Evonik under the trade name AEROSIL^{®} 200.

In some embodiments, the non-aqueous writing ink may comprise dispersed silica particles or silica-based gel-like particles wherein the average particle size is less than about 1 µm, more specifically less than about 0.9 µm, in particular less than about 0.8 µm using dynamic light scattering (DLS) such as Malvern Zetasizer ZS.

In some embodiments, the non-aqueous writing ink may comprise silica particles, in particular hydrophilic silica particles, in an amount of between about 0.02 to about 1 wt.-%, more specifically between about 0.05 to about 0.7 wt.-%, and in particular between about 0.1 and about 0.5 wt.-%, relative to the total weight of the ink.

In some embodiments, the fatty acid amide wax may comprise an N,N'-ethylene-bis-fatty acid amide. In some embodiments, it may be advantageous that the fatty acid amide wax may comprise an octadecanamide of the following formula (I)

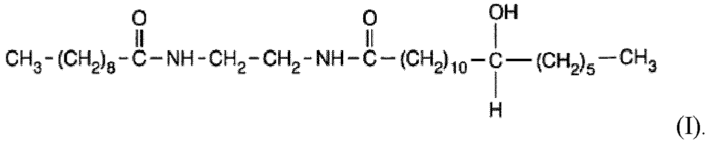

In some embodiments, the gelling agent comprises a mixture of silica particles and of a fatty acid amide wax and the fatty acid amide wax is present in amounts of between about 0.05 and about 1 wt.-%, more specifically between about 0.08 and about 0.5% wt.-%, and in particular between about 0.1 and about 0.3% wt.-%; and/or the silica particles are present in amounts between about 0.02 and about 1 wt.-%, more specifically between about 0.05 and about 0.7 wt.-%, and in particular between about 0.1 and about 0.5 wt.-%; relative to the total weight of the ink.

Additionally or alternatively, in some embodiments, the gelling agent may comprise cellulose nanofibers. The cellulose nanofibers may be water-insoluble. When referring to a water-insoluble cellulose nanofiber it should be understood that cellulose nanofibers may still comprise bundles of individual cellulose fibrils which are bound to each other under formation of highly crystalline structures in which the individual cellulose macromolecules have formed extensive intra-and intermolecular hydrogen bonds. The actual dissolution of cellulose nanofibers requires disruption of these intra- and intermolecular hydrogen bonds affording solubilized cellulose nanofibers. In the water-insoluble cellulose nanofiber of the present disclosure, the crystallinity within the cellulose nanofiber is so extensive that dissolution into individual cellulose fibrils or macromolecules is not taking place (or at least not to a substantial degree) when adding the cellulose nanofibers to distilled water (i.e. without adding external acids or bases) at room temperature (e.g. at about 20 °C). In other words, the property of the cellulose nanofiber being water-insoluble may be seen as a measure of the size of and/or the crystallinity within the cellulose nanofibers.

In some embodiments, the water-insoluble cellulose nanofibers may comprise fibers having a diameter of less than about 1000 nm, more specifically less than about 800 nm, and in particular less than about 500 nm. The method of determining the diameter of the cellulose nanofibers is not particularly limited and includes measuring the two-dimensional representation of the diameter of the fiber in a scanning electron microscope (SEM) image. Alternatively or additionally, in some embodiments, the water-insoluble cellulose nanofibers may comprise fibers having a diameter of more than about 10 nm, more specifically more than about 20 nm, and in particular more than about 30 nm. Alternatively or additionally, in some embodiments, the water-insoluble cellulose nanofibers may comprise fibers having an aspect ratio of at least about 5, more specifically at least about 8, and in particular at least about 10. The determination of the aspect ratio is again not particularly limited and includes measuring the two-dimensional representation of the diameter and length of the fiber in a scanning electron microscope (SEM) image. In some embodiments, the water-insoluble cellulose nanofibers may comprise fibers having a length of at least about 3 µm, more specifically at least about 5 µm, and in particular at least about 8 µm. The determination of the length is not particularly limited and includes measuring the length on a two-dimensional representation of the fiber in a scanning electron microscope (SEM) image. In some embodiments, the water-insoluble cellulose nanofibers may comprise fibers which form a network, in particular a three-dimensional network of entangled fibers.

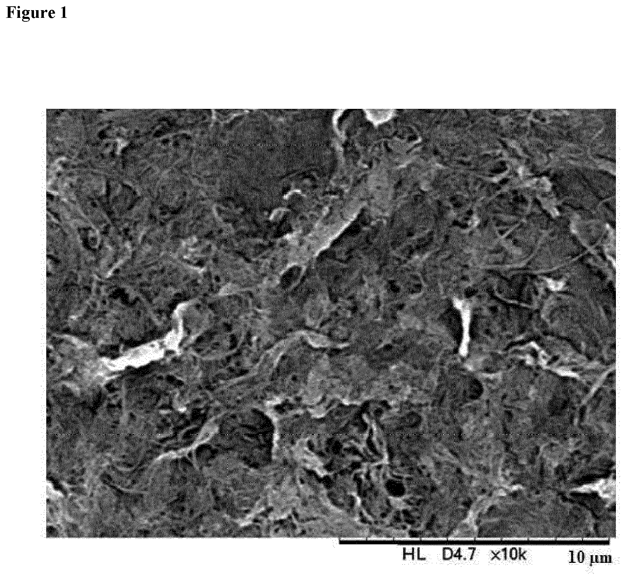

An exemplary water-insoluble cellulose nanofiber that can be used in the present disclosure is shown in Fig. 1. Fig. 1 shows a three-dimensional network of entangled cellulose nanofibers as sold under the tradename ASL CNF 901 by Fuji Pigment Co. Ltd. The water-insoluble cellulose nanofibers shown in Fig. 1 are relatively large and are not broken down in individual single-digit nanometer fibrils.

In some embodiments, the water-insoluble cellulose nanofibers do not comprise 2,2,6,6-tetramethylpiperidine-1-oxyl radical- (TEMPO)-mediated or otherwise oxidized cellulose.

When referring to the water-insoluble cellulose nanofibers not comprising 2,2,6,6-tetramethylpiperidine-1-oxyl radical- (TEMPO)-mediated or otherwise oxidized cellulose, is intended to mean any water-insoluble cellulose nanofibers which were not subjected to an oxidation treatment, such as a treatment which is oxidizing a part of the hydroxyl groups (-OH groups) of β-glucose constituting cellulose to aldehyde groups (-CHO groups) and/or a carboxyl groups (-COOH groups).

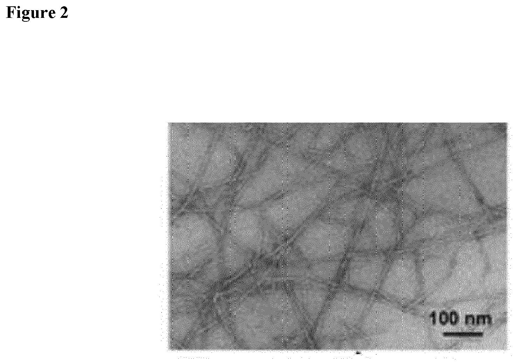

Fig. 2 shows a SEM image of TEMPO-oxidized cellulose nanofibers. Due to the oxidizing treatment, the cellulose fibers are broken down into individual single-digit nanometer fibrils which are solubilized in water.

From the above, it should be apparent that individual (linear) cellulose macromolecules do not represent cellulose nanofibers according to the present disclosure.

In some embodiments, the gelling agent does not comprise cellulose derivatives functionalized with an ether moiety, in particular methyl- and ethylcellulose, hydroxyethyl cellulose, hydroxypropyl cellulose, hydroxyethyl ethyl cellulose, and carboxymethylcellulose. The aforementioned cellulose derivatives are typically water-soluble, e.g. because the ether moieties prevent the proper crystallization of the cellulose macromolecules. Additionally or alternatively, the gelling agent may not comprise cellulose ester resins.

In some embodiments, the gelling agent comprises water-insoluble cellulose nanofibers in amounts of between about 0.02 and about 0.5 wt.-%, more specifically between about 0.05 and about 0.25 wt.-%, and in particular between about 0.07 and about 0.2 wt.-%, relative to the total weight of the ink

In some embodiments, the water-insoluble cellulose nanofibers may be prepared from plant biomass.

In some embodiments, the water-insoluble cellulose nanofibers may be characterized in dispersion by an average particle diameter as measured by dynamic light scattering, in particular using the MALVERN Zetasizer nano ZS apparatus, of lower than about 3 µm, in particular lower than about 2 µm.

In some embodiments, the water-insoluble cellulose nanofibers may be incorporated into the ink as a dispersion comprising about 0.05 to about 10% by weight water-insoluble cellulose nanofibers in an organic solvent, in particular from about 0.5 to about 2% by weight, based on the total weight of the dispersion.

Next, the one or more solvents is described.

The term "solvent" is not intended to be particularly limiting and also includes *i.a.* a medium which disperses or suspends solid components such as pigments. In some embodiments, the solvent may be selected from a polar solvent, in particular a polar solvent selected from the group consisting of glycol ethers, alcohols, and mixture thereof. It may be advantageous that the one or more solvents is selected from polyethylene glycol ethers, polypropylene glycol ethers, phenoxyethanol, 1-phenoxy-2-propanol, or mixtures thereof. In some embodiments, the one or more solvent comprises an alcohol having a high boiling point such as boiling point of above about 130°C, above about 150°C, or above about 200°C. In some embodiments, the alcohol may be selected form the group consisting of benzyl alcohol, ethylene glycol, diethylene glycol, propylene glycol, dipropylene glycol, trimethylene glycol, glycerin, and mixtures thereof. It may be particularly advantageous that the alcohol is benzyl alcohol. In another embodiment the solvent may be a glycol ether having a high boiling point such as boiling point of above about 130°C, above about 150°C, or above about 200°C. It may be advantageous that the glycol ether is selected from the group consisting of diethylene glycol monoethyl ether, diethylene glycol mono butyl ether, dipropylene glycol monobutyl ether, tripropylene glycol monomethyl ether, phenoxyethanol, phenoxypropanol, and mixtures thereof. It may be particularly advantageous that the glycol ether is selected from the group consisting of phenoxyethanol, 1-phenoxy-2-propanol and mixture thereof.

In some embodiments, the one or more solvents may be selected from the group consisting of glycol ethers, alcohols, and mixture thereof. It may be advantageous that the solvent is selected from polyethylene glycol ethers, polypropylene glycol ethers, phenoxyethanol, 1-phenoxy-2-propanol, or mixtures thereof.

In some embodiments, the one or more solvents comprises phenoxyethanol and/or 1-phenoxy-2-propanol.

In some embodiments, the one or more solvents may be present in amounts of between about 25 and about 80 wt.-%, relative to the total weight of the ink. In some embodiments, it may be advantageous that the solvent is present in amounts between about 45 and about 75 wt.-%, and in particular between about 48 and about 65 wt.-%, relative to the total weight of the ink.

In some embodiments, it may be advantageous that the ink comprises between about 45 and about 75 wt.-% of phenoxyethanol or 1-phenoxy-2-propanol.

Next, the at least one pigment and, more generally, the coloring agents are described.

The ink comprises about 5 to about 25 wt.-% of at least one pigment having a D50 particle size of between about 80 nm and about 700 nm. The number of pigments is not particularly limited and a combination of two, three, four or more pigments can be used. In addition to these pigment(s), in some embodiments, further pigments not having the aforementioned size criterium and/or dyes may also be present.

In some embodiments, the at least one pigment includes one or more of organic, inorganic and processed pigments. Thus, the pigment may for example be an inorganic pigment such as a carbon black, ultramarine and titanium dioxide pigment, an organic pigment such as an azo-based pigment, phthalocyanine-based pigment, indigo pigment, thioindigo pigment, thren-based pigment, quinacridone-based pigment, anthraquinone-based pigment, thron-based pigment, diketopyrrolopyrrole-based pigment, dioxazine-based pigment, perylene-based pigment, perinone-based pigment and isoindolinone-based pigment, and the like.

In some embodiments, the at least one pigment includes one or more of the following pigments: a phthalocyanine pigment, such as Pigment Blue 15:1, Pigment Blue 15:3, Pigment Green 7; quinacridone such as Pigment red 122; pyrrole dione pigments such as Pigment Red 254; a single azo pigment such as Pigment Orange 64; and a dioxazine pigment such as Pigment Violet 23.

In some embodiments, the at least one pigment includes a black and/or a blue pigment, more specifically includes a carbon-black and/or Pigment Blue based pigment such as Pigment Blue 15:1 and Pigment Blue 15:3, and even more specifically includes a carbon-black based pigment.

In some embodiments, the non-aqueous writing ink comprises a pigment having acidic surface groups, in particular a carbon-black based pigment. The term acidic surface groups is presently understood with its conventional meaning and in particular includes functional groups which deprotonate in water at pH 7 such as carboxylic groups or phenolic groups. Additionally or alternatively, the acidic functional groups may be grafted onto the pigment or be part of a (polymeric) compound which is coated onto the pigment surface. The method of determining the presence of acidic surface groups on the pigment is not particularly limited and includes suspending the pigment (optionally separated from the non-aqueous writing ink by e.g. gravity-assisted sedimentation) in deionized water and measuring the pH of the slurry. The presence of acidic surface groups may also be determined according to ASTM D1512-21. In some embodiments, the pigment has a pH value as measured according to ASTM D1512-21 of less than about 4, more specifically less than about 3, and in particular less than about 2.7.

Methods of measuring the D50 value for the at least one pigment are well-known in the art. One method includes dynamic light scattering (DLS) such as Malvern Zetasizer ZS. An alternative method includes laser diffraction, for instance the laser-diffraction based method according to ISO 13320:2009. In some embodiments, the at least one pigment has a D50 particle size of between about 100 nm and about 500 nm, in particular between about 120 nm and about 350 nm.

In some embodiments, the at least one pigment has a D90 particle size of less than about 1200 nm, more specifically less than about 1000 nm and in particular less than about 900 nm. Methods of measuring the D90 value for the at least one pigment are well-known in the art and include the above methods referred to for the D50 value.

The ink comprises about 5 to about 25 wt.-%, relative to the total weight of the ink, of at least one pigment having a D50 particle size of between about 80 nm and about 700 nm. In some embodiments, it may be advantageous that the ink comprises about 6 to about 22 wt.-%, more specifically 7 to about 20 wt.-%, and in particular 8 to about 18 wt.-%, of said at least one pigment; relative to the total weight of the ink.

In some embodiments, the ink may further comprise a dye. This may be particularly beneficial to adjust the color impression of the pigment and/or to intensify the color impression. In some embodiments, the ink comprises the dye in amounts which are lower than the at least one pigment, for instance about 0.5 to about 5 wt.-%, relative to the total weight of the ink. Examples of a dye usable in the ink according to the present disclosure include the following: VARIFAST Black 3806 (C.I. Solvent Black 29), 3807 (trimethyl benzyl ammonium salt of C.I. Solvent Black 29), Spirit Black SB (C.I. Solvent Black 5), SPIRON Black GMH (C.I. Solvent Black 43), Solvent Black 46 (salt forming from of C.I. Basic Violet 3 and Acid Yellow 36), VARIFAST Red 1308 (salt forming form of C.I. Basic Red 1 dye and C.I. Acid Yellow 23 dye), Solvent Red 49, VARIFAST Yellow AUM (salt forming form of C.I. Basic Yellow 2 dye and C.I. Acid Yellow 42 dye), SPIRON Yellow C2 GH (organic acid salt of C.I. Basic Yellow 2), SPIRON Violet CRH (C.I. Solvent Violet 8-1), VARIFAST Violet 1701 (salt forming form of C.I. Basic Violet 1 and C.I. Acid Yellow 42 dye), SPIRON Red CGH (organic acid salt of C.I. Basic Red 1), SPIRON Pink BH (C.I. Solvent Red 82), Nigrosine Base EX (C.I. Solvent Black 7), Oil Blue 613 (C.I. Solvent Blue 5), and Neozapon Blue 808 (C.I. Solvent Blue 70).

Next, the one or more resins are described.

The ink comprises about 5 to about 35 wt.-% of one or more resins, relative to the total weight of the ink. The resin may also act as a viscosity-imparting agent. In some embodiments, it may be particularly advantageous that the ink comprises one or more resins selected from polyester resins, polyurethane resins, ketone resins, ketone-formaldehyde resins, ether resins, vinyl resins, polyvinyl alcohols, acrylic resins, styrene-acrylic resins, styrene-maleic acid copolymer resins, rosin-maleic acid copolymer resins, phenol resins, cellulosic resins, amid resins, alkyd resins, rosin modified resins, rosin modified phenol resins, xylene resins, polyacetal resins, terpene resins, phenoxy resins or a mixture thereof. In some embodiments, it may be advantageous that the resin is selected from polyester resins, polyurethane resins, ketone resins, ether resins, and mixtures thereof. It may be particularly advantageous that the one or more resins comprises a ketone resin.

In some embodiments, the one or more resins is present in an amount of between about 7 and about 25 wt.-%, and in particular between about 10 to about 20 wt.-%, relative to the total weight of the ink.

Next, the non-Newtonian viscosity properties of the ink are described.

The writing ink has a viscosity at rest at about 20 °C of between about 15 000 cps and about 150 000 cps and a viscosity under shear at about 100 s⁻¹ at about 20 °C of between about between about 1200 cps and about 10 000 cps.

The viscosity at rest may be measured at about 20°C with a cone-and-plate rheometer such as a rheometer by Malvern Kinexus with a cone of about 40 mm and an angle of about 4° with a shear rate of 0.01 s⁻¹. The viscosity under shear may be measured at about 20°C with a cone-and-plate rheometer such as a rheometer by Malvern Kinexus with a cone of about 40 mm and an angle of about 4° with a shear rate of 100 s⁻¹.

In some embodiments, the non-aqueous writing ink may have a viscosity at rest at about 20 °C of between about 20 000 cps and about 120 000 cps, and in particular between about 25 000 cps and about 100 000 cps.

In some embodiments, the non-aqueous writing ink may have a viscosity under shear at about 100 s⁻¹ at about 20 °C of between about 1300 cps and about 5 000 cps, and in particular between about 1500 cps and about 4000 cps.

In some embodiments, the non-aqueous writing ink may have a loss factor tan δ at rest of between about 3 and about 15, more specifically between about 4 and about 12, and in particular between about 5 and about 10. The loss factor tan δ at rest may be measured at about 20°C with a cone-and-plate rheometer such as a rheometer by Malvern Kinexus with a cone of about 40 mm and an angle of about 4° with an oscillation measurement (frequency = about 1 Hz, shear about 20 Pa).

In some embodiments, the non-aqueous writing ink may have a loss factor tan δ after shear of between about 8 and about 60, more specifically between about 11 and about 50, and in particular between about 12 and about 40. The loss factor tan δ after shear may be measured at about 20°C with a cone-and-plate rheometer such as a rheometer by Malvern Kinexus with a cone of about 40 mm and an angle of about 4° with an oscillation measurement (frequency = about 1 Hz, shear about 20 Pa) after pre-shearing the sample (to simulate the writing process) for about 30 seconds at about 1000 s⁻¹.

Next, optional components are described:
The rheology of the ink may further be optimized by including a homo or copolymer of vinylpyrrolidone in the ink. In some embodiments, the non-aqueous writing ink comprises a homo or copolymer of vinylpyrrolidone, in particular polyvinylpyrrolidone, in particular wherein the homo or copolymer of vinylpyrrolidone is present in amounts of between about 0.02 and about 1.5 wt.-%, more specifically between about 0.03 and about 0.8 wt.-%, and in particular between about 0.05 and about 0.5 wt.-%, relative to the total weight of the ink. In some embodiments, it may be particularly advantageous that the copolymer of vinylpyrrolidone, in particular a polyvinylpyrrolidone, has a weight-average molecular weight of above about 200 kDa, specifically between about 400 and about 2300 kDa, more specifically between about 450 and about 2000 kDa, and in particular between about 600 and about 1900 kDa.

Without wishing to be bound by theory, it is believed that the homo or copolymer of vinylpyrrolidone surprisingly and advantageously adjusts the gelling properties of the network of water-insoluble cellulose nanofibers (if used). Cellulose nanofibers are excellent in providing low viscosity during writing while maintaining writing smoothness. However, in select applications, in particular in large diameter ball pens, the writing cleanliness may not perfect.

Again without wishing to be bound by theory, it is believed that there may be a lack of elasticity under shear such that ink which has already flown from the point does not retract properly in larger points when the user decreases writing speed or temporarily stops writing. This may have a detrimental effect on performance, in particular writing cleanliness. The effect may be particularly noticeable in larger point pens. Again without wishing to be bound by theory, the ability of the polymeric rheology agent to accept hydrogen bonds from the dispersed water-insoluble cellulose nanofibers while not contributing hydrogen bonds to the cellulose nanofibers itself is believed to introduce an "elasticity" to the ink which facilitates the retraction of the ink when the user decreases writing speed or temporarily stops writing.

In some embodiments, the relative weight ratio of the homo or copolymer of vinylpyrrolidone to the water-insoluble cellulose nanofibers, if used, may be between about 6:1 to about 1:6, more specifically between about 4:1 and about 1:4.

In some embodiments, it may be particularly advantageous that the homo or copolymer of vinylpyrrolidone may be present in amounts of between about 0.05 and about 0.5 wt.-%, relative to the total weight of the ink, and that cellulose nanofibers are present in an amount of about 0.05 and about 0.25 wt.-%, relative to the total weight of the ink.

In some embodiments, the non-aqueous writing ink further comprises one or more further additives, in particular one or more additives selected from the group consisting of thickening agents, clear drain agents, viscosity imparting agents, lubricants, dispersing agents and mixture thereof.

In some embodiments, it may be particularly advantageous that the non-aqueous writing ink comprises a dispersing agent. The dispersing agent may further facilitate the stability of the ink against settling. It may also be helpful as a processing agent by allowing the stable production of a pigment concentrate before letting it down to the final ink composition.

In some embodiments, the non-aqueous writing ink (further) comprises a polymeric dispersing agent. The polymeric dispersing agent may be particularly helpful in facilitating the stability of the ink against settling in the solvent. In some embodiments, the polymeric dispersing agent is configured to aggregate on the surface of the pigment, in particular by ion-ion interaction and/or formation of hydrogen bridges. In some embodiments, the polymeric dispersing agent may be an alkoxylated polymer which is basic in an aqueous environment, in particular C₁-C₄ polyalkoxylated compounds comprising one or more functional groups which is basic in an aqueous environment such as amino and/or carboxylate groups. An example of such a polymeric dispersing agent is Solsperse 20000 from The Lubrizol Corporation.

In some embodiments, the non-aqueous writing ink (further) comprises a mixture of two or more dispersing agents, in particular a mixture of a first polymeric dispersing agent (the polymeric dispersing agent being as described above) and a second non-polymeric dispersing agent. Examples of the second non-polymeric dispersing agent include e.g. Solsperse 5000S from The Lubrizol Corporation. In particular, without wishing to be bound by theory, it is believed that the addition of a sterically smaller non-polymeric dispersing agent to the polymeric first dispersing agent enables to reinforce the affinity between the first dispersing agent and the surface of the pigment.

In some embodiments, the non-aqueous writing ink may further comprise a defoamer such as Tego Airex 900 from Evonik.

In some embodiments, the writing instrument may comprise a ball-point at the writing tip having a size of about 0.7 mm or more, in particular 0.8 mm or more, in particular 1.0 mm or more and in particular from about 1.0 mm to about 1.6 mm. In some embodiments, the handheld writing instrument may be configured to dispense from 55 to 90 mg ink per 150 m of writing line, specifically from 55 to 75 mg ink per 150 m of writing line, and in particular from 60 to 70 mg ink per 150 m of writing line.

In a second aspect of the present disclosure, there is provided a non-aqueous writing ink which comprises, relative to the total weight of writing ink: about 5 to about 25 wt.-%, of at least one pigment; about 5 to about 35 wt.-% of one or more resins; a gelling agent comprising one or more of: a) a mixture of silica particles and of a fatty acid amide wax, b) water-insoluble cellulose nanofibers; and one or more solvents; wherein the writing ink has a viscosity at rest at about 20 °C of between about 15 000 cps and about 150 000 cps and a viscosity under shear at about 100 s⁻¹ at about 20 °C of between about between about 1200 cps and about 10000 cps; and wherein the pigment has a D50 particle size of between about 80 nm and about 700 nm.

In some embodiments, the non-aqueous writing ink is comprised in a handheld writing instrument comprising a writing tip which is configured to dispense between about 50 and about 100 mg ink per 150 m of writing line. In some embodiments, the handheld writing instrument may be configured to dispense from 55 to 90 mg ink per 150 m of writing line, specifically from 55 to 75 mg ink per 150 m of writing line, and in particular from 60 to 70 mg ink per 150 m of writing line.

The embodiments recited for the above first aspect of the disclosure are equally combinable with the aforementioned second aspect of the disclosure.

In the following the present disclosure will be further elaborated by way of Examples.

### Examples

### Measuring Methods

Measurements on inks and pens may be carried out as follows:

### 1. Measurement of rest viscosity

The viscosity of the ink may be measured at 20°C with a cone-and-plate rheometer Malvern Kinexus with a cone of 40 mm and an angle of 4° with a shear rate of 0.01 s⁻¹.

### 2. Measurement of shear viscosity

The viscosity of the ink may be measured at 20°C with a cone-and-plate rheometer Malvern Kinexus with a cone of 40 mm and an angle of 4° with a shear rate of 100 s⁻¹.

### 3. Determination of shear thinning index

Mathematical formula: Shear thinning index = (Measurement of rest viscosity 0.01s⁻¹ at 20° CP 4°/40 mm) / (Measurement of rest viscosity 100 s⁻¹ at 20° CP 4°/40 mm)

### 4. Measurement of tan delta at rest

The measurement may be performed with a cone-and-plate rheometer Malvern Kinexus with a cone of 40 mm and an angle of 4° and with an oscillation measurement (Frequency = 1 Hz, Shear 20 Pa).

### 5. Seepage 23 °C - 24h storage

This test measures the amount of ink that will leak from the point of a ball pen when it is stored pointing downwards for one day at 23°C. The process is carried out as follows (test on 10 pens):
1. Ball pen start = make pen write to decrease its viscosity.
2. Wipe ink from the point with non fluffy paper
3. Store the Ball pen 24 hours point down at 23°C / 50% RH
4. Transfer ink drop from the pen point to a paper. Rotate the point of each pen on the test sheet 360°, transferring any ink seepage to the test sheet.
5. Cover the seepage display with a strip of transparent tape
6. Spread the ink stain using a ceramic roulette to a circular stain.
7. Measurement of diameter of each stain (record the minimum diameter that incorporates the entire sport)
8. Calculate the average spot size (mm) from all 10 samples.

### 6. Seepage 1 week storage 40°C / 80 % RH

This test measures the amount of ink that will leak from the point of a ball pen when it is stored point down one week at 40°C / 80% RH. The test simulates keeping the pen in pocket of shirt close to human body. The process is carried out as follows (test on 10 pens):
1. Ball pen start = make pen write to decrease its viscosity.
2. Wipe ink from the point with non fluffy paper
3. Store the Ball pen 7 days point down @ 40°C / 80% RH
4. Transfer ink drop from the pen point to a paper. Rotate the point of each pen on the test sheet 360°, transferring any ink seepage to the test sheet.
5. Cover the seepage display with a strip of transparent tape
6. Spread the ink stain using a ceramic roulette to a circular stain.
7. Measurement of diameter of each stain (record the minimum diameter that incorporates the entire sport)
8. Calculate the average spot size (mm) from all 10 samples.

### 7. Machine writing cleanliness

This test evaluates the machine write quality of pens under given test conditions during the first 20 meters of machine writing.

Equipment:
1. Air conditioned and humidity-controlled room: 23 °C (±2°) 50% RH (±5%)
2. Writing machine operated according to the following guidelines:
   a) General conditions:
      70° writing angle (0, +10)
      100 mm circle circumference
      Total weight pen / holder / additional weight: 140-160 grams
      ISO 12757 test paper
      Writing surface of polished stainless steel with felt underneath
   b) Machine Parameters:
      4.5 m/min writing speed (± 0.5)
      0.6 mm spacing between circles (± 0.2) on Minitek APC or position 5 on Mikron
      1 axial pen rotation per 100 circles
      Writing length: 20 meters
   c) Process:
      1. Place cartridges in barrels
      2. Draw loops to start pens
      3. Select the position with spacing 0.6 mm and record 20 meters over the counter
      4. Run the test by pressing the "pens rotation"
      5. Calculate average score on tested pens excluding pens which have not started.
      6. Evaluate the cleanliness i.e. more or less uniform thickness on the line (presence of stains). The regularity of the written line thickness is visually assessed and rated in intervals of 1. The rating scale is as follows:
         10: very clean, no excess, no stains,
         0: not clean, excess and ink stains on the written lines

### 8. Machine writing regularity

This test evaluates the machine write quality of pens under given test conditions during the first 20 meters of machine writing.

Equipment:
1. Air conditioned and humidity-controlled room: 23 °C (±2°) 50% RH (±5%)
2. Writing machine operated according to the following guidelines:
   a) General conditions:
      70° writing angle (0, +10)
      100 mm circle circumference
      Total weight pen / holder / additional weight: 140-160 grams
      ISO 12757 test paper
      Writing surface of polished stainless steel with felt underneath
   b) Machine Parameters:
      4.5 m/min writing speed (± 0.5)
      0.6 mm spacing between circles (± 0.2) on Minitek APC or position 5 on Mikron
      1 axial pen rotation per 100 circles
      Writing length: 20 meters
   c) Process:
      1. Place cartridges in barrels
      2. Draw loops to start pens
      3. Select the position with spacing 0.6 mm and record 20 meters over the counter
      4. Run the test by pressing the "pens rotation"
      5. Calculate average score on tested pens excluding pens which have not started.
      6. Evaluate the regularity i.e. more or less uniform color when writing (presence of white in lines). The rating scale is as follows, with intervals of 1:
         10: very regular, no white in the line,
         0: not regular

### 9. Complete ink restitution

This test reflects the "mileage" of a pen, i.e. the capacity of the pen to write until it stops writing. Samples are marked "Yes" when the pen writes until its cartridge is completely empty. Otherwise, the sample is marked as "No".

### 10. Handwriting cleanliness

This test measures the uniformity in thickness of a written line. The regularity of the written line thickness is visually assessed and rated in intervals of 1. The rating scale is as follows:
10: very clean, no excess, no stains,
0: not clean, excess and ink stains on the written lines

### 11. Handwriting regularity

This test measures the uniformity of color when writing. The samples are visually inspected for lighter or darker areas and "channels" in the middle of a line. The rating scale is as follows, with intervals of 1:
10: very regular, no white in the line,
0: not regular

### Example 1

In the Table below are illustrated the amounts of each component in the final ink composition of example 1:

| | Content in wt% | Primary function |
|---|---|---|
| 1-phenoxy-2-propanol (PPH) | 54.78 | Solvent |
| Polyamide wax (Luvotix^{®} SAB) | 0.27 | Fatty acid amide wax (part of gelling system) |
| Hydrophilic silica (Aerosil 200 at 10% in 1-phenoxy -2-propanol) | 0.40 (0.04% in dry extract) | Silica (part of gelling system) |
| Carbon black (Emperor1200^{®}) | 18 | Pigment |
| Solvent red 49 | 1.00 | Dye |
| Basic alkoxylate polymer (Solsperse 20 000^{®} from Lubrizol) | 7.20 | First dispersing agent |
| Mono-sulfonated copper phthalocyanin, dioctadecylammonium salt (Solsperse 5000s^{®} from Lubrizol) (optional) | 1.80 | Second dispersing agent |
| Resin acetophenone formaldehyde modified (SK resin) | 14.80 | Binder (Newtonian) |
| Polyvinylpyrrolidone (PVP K80) | 0.10 | Elastic agent |
| Sorbitan sesquioleate (Lonzest SOC) | 1.30 | Additive (clear drain) |
| Organo modified polysiloxane (Tego Airex 900) | 0.05 | Additive (defoamer) |
| Zelec A081 (mixture) | 0.10 | Additive (acid neutralizer) |
| 2,2'-(octadec-9-enylimino)bisethanol (Noramox O2) | 0.20 | Additive (basic neutralizer) |

The ink composition of Example 1 is prepared by forming a premix of pigment concentrate, a premix of fatty acid amid and a premix of silica, as detailed below:
Premix of pigment concentrate:

| **Material** | **%** |
|---|---|
| 1-phenoxy-2-propanol (PPH) | 42.7 |
| Basic alkoxylate polymer (Solsperse 20 000^{®} from Lubrizol) | 10 |
| Mono-sulfonated copper phthalocyanin, dioctadecylammonium salt (Solsperse 5000s^{®} from Lubrizol) (optional) | 2.5 |
| Carbon black (Emperor1200^{®}) | 25 |

The above components were introduced in the tank of a disperser (DISPERMAT LC75 or DISPERMAT VL 1-5) under agitation (vortex) and the resulting mixture was homogenised during 30 minutes at 18 m/s to provide a first mixture (MIX 1). MIX 1 was then diluted in 1-phenoxy-2-propanol (80.2% of MIX 1 with 19.8% of 1-phenoxy-2-propanol) and the mixture was homogenized during 10 minutes at 8 m/s to provide a diluted mixture (MIX 2). MIX 2 was then introduced in the grinding chamber of a ball mill (BUHLER PML2 - Superflow) wherein the grinding chamber was filled at 75% with ceramic balls of 0.4 mm diameter, and was grinded at a rotation speed of 2700 rpm and a circulation rate through the mill of 50 kg/h. This process was carried out by circulating MIX 2 30 times in the grinding chamber while maintaining the temperature below 50°C (so as not to denature the dispersants). At the end of this step, the pigment concentrate was obtained having a size distribution of D50 lower than 250 nm and of D90 lower than 300 nm.

Premix of fatty acid amide wax: The fatty acid amide wax Luvotix^{®} SAB is prepared in premix form by passing 5 wt.-% Luvotix^{®} SAB in phenoxypropanol 15 times at 50°C through a rotor/stator disperser (IKA MHD type) at 23 m/s.

The silica Aerosil 200 is prepared in premix form by passing 10 wt.-% Aerosil 200 in phenoxypropanol, for 12 times at 60°C through a rotor/stator disperser (IKA MHD type) at 23 m/s.

The ink of Example 1 was prepared by mixing the components below at a temperature of 50°C:

| **Material** | **%** |
|---|---|
| 1-phenoxy-2-propanol (PPH) | 1.05 |
| Organo modified polysiloxane (Tego Airex 900) | 0.05 |
| Pigment concentrate premix | 72 |
| Solvent Red 49 | 1 |
| Zelec A081 | 0.1 |
| 2,2'-(octadec-9-enylimino)bisethanol (Noramox O2) | 0.2 |
| Sorbitan sesquioleate (Lonzest SOC) | 1.3 |
| Resin acetophenone formaldehyde modified (SK resin) | 14.8 |
| Silica premix | 4 |
| Polyvinylpyrrolidone (PVP K80) | 0.1 |
| Fatty acid amid wax premix | 5.4 |
| TOTAL | 100 |

The rheological properties of the ink according to Example 1 were as follows:
- Viscosity at rest (at 20°C) = 89300 cP
- Viscosity under shear (at 20°C) = 2579 cP
- Tan delta at rest = 4.6
- Seepage 23°C - 24h storage = 0.9 mm
- Seepage after 1 week storage at 40°C / 80 % RH = 1.5 mm
- Machine writing cleanliness = 9
- Machine writing regularity = 9
- Complete ink restitution = Yes
- Handwriting cleanliness = 6
- Handwriting regularity = 8

### Example 2

In the Table below are illustrated the amounts of each component in the final ink composition of example 2:

| | Content in wt% | Primary function |
|---|---|---|
| 1-phenoxy-2-propanol (PPH) | 47.35 | Solvent |
| Cellulose nanofibers (ASL CNF 901 Fibers^{®}) (supplier: Fuji pigments co ltd) 1.3% cellulose nanofibers in phenoxy ethanol | 8.5 (0.11% in dry extract) | Cellulose nanofibers (part of gelling system) |
| Hydrophilic silica (Aerosil 200 at 10% in 1-phenoxy -2-propanol) | 0.40 (0.04% in dry extract) | Silica (part of gelling system) |
| Carbon black (Emperor1200^{®}) | 17.5 | Pigment |
| Solvent red 49 | 1.00 | Dye |
| Basic alkoxylate polymer (Solsperse 20 000^{®} from Lubrizol) | 7.00 | First dispersing agent |
| Mono-sulfonated copper phthalocyanin, dioctadecylammonium salt (Solsperse 5000s^{®} from Lubrizol) (optional) | 1.75 | Second dispersing agent |
| Resin acetophenone formaldehyde modified | 14.75 | Binder (Newtonian) |

| (SK resin) | | |
|---|---|---|
| Polyvinylpyrrolidone (PVP K80) | 0.10 | Elastic agent |
| Sorbitan sesquioleate (Lonzest SOC) | 1.30 | Additive (clear drain) |
| Organo modified polysiloxane (Tego Airex 900) | 0.05 | Additive (defoamer) |
| Zelec A081 (mixture) | 0.10 | Additive (acid neutralizer) |
| 2,2'-(octadec-9-enylimino)bisethanol (Noramox O2) | 0.20 | Additive (basic neutralizer) |

The ink composition of Example 2 is prepared by forming a premix of pigment concentrate, a premix of cellulose nanofibers and a premix of silica, as detailed below:
Premix of pigment concentrate:

| **Material** | **%** |
|---|---|
| 1-phenoxy-2-propanol (PPH) | 42.7 |
| Basic alkoxylate polymer (Solsperse 20 000^{®} from Lubrizol) | 10 |
| Mono-sulfonated copper phthalocyanin, dioctadecylammonium salt (Solsperse 5000s^{®} from Lubrizol) (optional) | 2.5 |
| Carbon black (Emperor1200^{®}) | 25 |

The above components are introduced in the tank of a disperser (DISPERMAT LC75 or DISPERMAT VL 1-5) under agitation (vortex) and the resulting mixture is homogenised during 30 minutes at 18 m/s to provide a first mixture (MIX 1). MIX 1 was then diluted in 1-phenoxy-2-propanol (80.2% of MIX 1 with 19.8% of 1-phenoxy-2-propanol) and the mixture is homogenized during 10 minutes at 8 m/s to provide a diluted mixture (MIX 2). MIX 2 is then introduced in the grinding chamber of a ball mill (BUHLER PML2 - Superflow) wherein the grinding chamber is filled at 75% with ceramic balls of 0.4 mm diameter, and is grinded at a rotation speed of 2700 rpm and a circulation rate through the mill of 50 kg/h. This process is carried out by circulating MIX 2 30 times in the grinding chamber while maintaining the temperature below 50°C (so as not to denature the dispersants). At the end of this step, the pigment concentrate is obtained having a size distribution of D50 lower than 250 nm and of D90 lower than 300 nm.

Premix of cellulose nanofibers: Cellulose nanofibers (ASL CNF 901 Fibers^{®}) are delivered by the supplier Fuji as a premix at 1 - 1.5% CNF in phenoxyethanol (= FUJI ASL CNF 901).

The silica Aerosil 200 is prepared in premix form by passing 10 wt.-% Aerosil 200 in phenoxypropanol, for 12 times at 60°C through a rotor/stator disperser (IKA MHD type) at 23 m/s.

The ink of Example 2 is prepared by mixing the components below at a temperature of 50°C:

| **Material** | **%** |
|---|---|
| Organo modified polysiloxane (Tego Airex 900) | 0.05 |
| Pigment concentrate premix | 70 |
| Solvent Red 49 | 1 |
| Zelec A081 | 0.1 |
| 2,2'-(octadec-9-enylimino)bisethanol (Noramox O2) | 0.2 |
| Sorbitan sesquioleate (Lonzest SOC) | 1.3 |
| Resin acetophenone formaldehyde modified (SK resin) | 14.75 |
| Silica premix | 4 |
| Polyvinylpyrrolidone (PVP K80) | 0.1 |
| CNF premix | 8.5 |
| TOTAL | 100 |

The rheological properties of the ink according to Example 2 are as follows:
- Viscosity at rest (at 20°C) = 30000 cP
- Viscosity under shear (at 20°C) = 2400 cP
- Tan delta at rest = 4.5
- Seepage 23°C - 24h storage = 1.0 mm
- Seepage after 1 week storage at 40°C / 80 % RH = 1.7 mm
- Machine writing cleanliness = 9
- Machine writing regularity = 9
- Complete ink restitution = Yes
- Handwriting cleanliness = 7
- Handwriting regularity = 8

The invention is further elaborated by the following clauses:
1. A handheld writing instrument comprising a non-aqueous writing ink which comprises, relative to the total weight of writing ink:
   about 5 to about 25 wt.-%, of at least one pigment,
   about 5 to about 35 wt.-% of one or more resins,
   a gelling agent comprising one or more of:
      a) a mixture of silica particles and of a fatty acid amide wax,
      b) water-insoluble cellulose nanofibers, and
   one or more solvents;
   wherein the handheld writing instrument comprises a writing tip which is configured to dispense between about 50 and about 100 mg ink per 150 m of writing line;
   wherein the writing ink has a viscosity at rest at about 20 °C of between about 15 000 cps and about 150 000 cps and a viscosity under shear at about 100 s⁻¹ at about 20 °C of between about between about 1200 cps and about 10000 cps; and
   wherein the pigment has a D50 particle size of between about 80 nm and about 700 nm.
2. The handheld writing instrument according to clause 1, wherein the writing tip comprises a writing ball held within the writing tip and wherein a gap between the writing tip and the writing ball is between about 700 nm and about 3000 nm, more specifically between about 800 nm and about 2500 nm and in particular between about 1000 nm and about 2000 nm.
3. The handheld writing instrument according to clause 1 or clause 2, wherein the non-aqueous writing ink comprises a pigment having acidic surface groups, in particular a carbon-black based pigment.
4. The writing instrument according to clause 3, wherein acidic functional groups are grafted onto the pigment or are part of a (polymeric) compound which is coated onto the pigment surface.
5. The handheld writing instrument according to any one of clauses 1 to 4, wherein the pigment has a D50 particle size of between about 100 nm and about 500 nm, in particular between about 120 nm and about 350 nm.
6. The handheld writing instrument according to any one of clauses 1 to 5, wherein the pigment has a D90 particle size of less than about 1200, more specifically less than about 1000 nm and in particular less than about 900 nm.
7. The handheld writing instrument according to any one of clauses 1 to 6, wherein the gelling agent comprises a mixture of silica particles and of a fatty acid amide wax and wherein the fatty acid amide wax is present in amounts of between about 0.05 and about 1 wt.-%, more specifically between about 0.08 and about 0.5% wt.-%, and in particular between about 0.1 and about 0.3% wt.-%; and/or silica particles between about 0.02 and about 1 wt.-%, more specifically between about 0.05 and about 0.7 wt.-%, and in particular between about 0.1 and about 0.5 wt.-%; relative to the total weight of the ink.
8. The handheld writing instrument according to clause 7, wherein the silica particles are hydrophilic silica particles.
9. The handheld writing instrument according to any one of clauses 1 to 8, wherein the fatty acid amide wax comprises an N,N'-ethylene-bis-fatty acid amide, in particular an octadecanamide of the following formula (I) 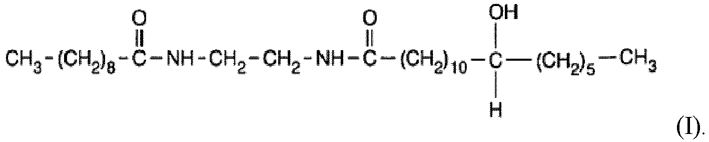
10. The handheld writing instrument according to any one of clauses 1 to 9, wherein the gelling agent comprises water-insoluble cellulose nanofibers in amounts of between about 0.02 and about 0.5 wt.-%, more specifically between about 0.05 and about 0.25 wt.-%, and in particular between about 0.07 and about 0.2 wt.-%, relative to the total weight of the ink.
11. The handheld writing instrument according to any one of clauses 1 to 10, wherein the water-insoluble cellulose nanofibers comprise fibers having a diameter of less than about 1000 nm, more specifically less than about 800 nm, and in particular less than about 500 nm, and/or having an aspect ratio of at least about 5, more specifically at least about 8, and in particular at least about 10.
12. The handheld writing instrument according to any one of clauses 1 to 11, wherein the water-insoluble cellulose nanofibers comprise fibers having a length of at least about 3 µm, more specifically at least about 5 µm, and in particular at least about 8 µm.
13. The handheld writing instrument according to any one of clauses 1 to 12, wherein the water-insoluble cellulose nanofibers comprise fibers having a diameter of more than about 10 nm, more specifically more than about 20 nm, and in particular more than about 30 nm.
14. The handheld writing instrument according to any one of clauses 1 to 13, wherein the water-insoluble cellulose nanofibers comprise fibers which form a network, in particular a three-dimensional network of entangled fibers.
15. The handheld writing instrument according to any one of clauses 1 to 14, wherein the water-insoluble cellulose nanofibers do not comprise 2,2,6,6-tetramethylpiperidine-1-oxyl radical- (TEMPO)-mediated or otherwise oxidized cellulose and do not comprise cellulose derivatives functionalized with an ether moiety, in particular methyl- and ethylcellulose, hydroxypropylcellulose and carboxymethylcellulose.
16. The handheld writing instrument according to any one of clauses 1 to 15, wherein the one or more solvents comprises a polar solvent, in particular a polar solvent selected from the group consisting of glycol ethers, alcohols, and mixture thereof; more specifically wherein the solvent is a polyethylene glycol ether, a polypropylene glycol ether, phenoxyethanol, 1-phenoxy-2-propanol, or mixtures thereof.
17. The handheld writing instrument according to any one of clauses 1 to 15, wherein the one or more solvents comprises phenoxyethanol and/or 1-phenoxy-2-propanol.
18. The handheld writing instrument of any one of clauses 1 to 17, wherein the one or more solvents is present in amounts of between about 25 and about 80 wt.-%, more specifically between about 45 and about 75 wt.-%, and in particular between about 48 and about 65 wt.-%, relative to the total weight of the ink.
19. The handheld writing instrument of any one of clauses 1 to 18, wherein the one or more resins comprises a resin selected from polyester resins, polyurethane resins, ketone resins, ketone-formaldehyde resins, ether resins, vinyl resins, polyvinyl alcohols, acrylic resins, styrene-acrylic resins, styrene-maleic acid copolymer resins, rosin-maleic acid copolymer resins, phenol resins, cellulosic resins, amid resins, alkyd resins, rosin modified resins, rosin modified phenol resins, xylene resins, polyacetal resins, terpene resins, phenoxy resins or a mixture thereof.
20. The handheld writing instrument of any one of clauses 1 to 19, wherein the one or more resins comprises a ketone resin.
21. The handheld writing instrument of any one of clauses 1 to 20, wherein the one or more resins is present in an amount of between about 5 and about 35 wt.-%, in particular of between about 7 and about 25 wt.-%, and in particular between about 10 to about 20 wt.-%, relative to the total weight of the ink.
22. The handheld writing instrument of any one of clauses 1 to 21, wherein the non-aqueous writing ink comprises a homo or copolymer of vinylpyrrolidone, in particular polyvinylpyrrolidone, and in particular wherein the homo or copolymer of vinylpyrrolidone is present in amounts of between about 0.02 and about 1.5 wt.-%, more specifically between about 0.03 and about 0.8 wt.-%, and in particular between about 0.05 and about 0.5 wt.-%, relative to the total weight of the ink.
23. The handheld writing instrument of clause 22, wherein the copolymer of vinylpyrrolidone, in particular a polyvinylpyrrolidone, has a weight-average molecular weight of above about 200 kDa, specifically between about 400 and about 2300 kDa, more specifically between about 450 and about 2000 kDa, and in particular between about 600 and about 1900 kDa.
24. The handheld writing instrument of any one of clauses 1 to 23, wherein the non-aqueous writing ink further comprises one or more additives, in particular one or more additives selected from the group consisting of thickening agents, clear drain agents, viscosity imparting agents, lubricants, dispersing agents and mixture thereof.
25. The handheld writing instrument of any one of clauses 1 to 24, wherein writing instrument comprises a ball-point at the writing tip having a size of about 0.5 mm or more, in particular 0.7 mm or more, and in particular 1.0 mm or more.
26. The handheld writing instrument of any one of clauses 1 to 25, wherein the non-aqueous writing ink comprises a dispersing agent.
27. The handheld writing instrument of clause 26, wherein the non-aqueous writing ink comprises a polymeric dispersing agent, in particular the polymeric dispersing agent being an alkoxylated polymer which is basic in an aqueous environment, in particular a C₁-C₄ polyalkoxylated compound comprising one or more functional groups which is basic in an aqueous environment such as amino and/or carboxylate groups.
28. The handheld writing instrument of clause 27, wherein the polymeric dispersing agent is configured to aggregate on the surface of the pigment, in particular by ion-ion interaction and/or formation of hydrogen bridges.
29. The handheld writing instrument of clause 27, wherein the non-aqueous writing ink comprises a mixture of a polymeric dispersing agent and a non-polymeric dispersing agent.
30. A non-aqueous writing ink which comprises, relative to the total weight of writing ink:
   about 5 to about 25 wt.-%, of at least one pigment,
   about 5 to about 35 wt.-% of one or more resins,
   a gelling agent comprising one or more of:
      c) a mixture of silica particles and of a fatty acid amide wax,
      d) water-insoluble cellulose nanofibers, and
   one or more solvents;
   wherein the writing ink has a viscosity at rest at about 20 °C of between about 15 000 cps and about 150 000 cps and a viscosity under shear at about 100 s⁻¹ at about 20 °C of between about between about 1200 cps and about 10000 cps; and
   wherein the pigment has a D50 particle size of between about 80 nm and about 700 nm.

Although specific embodiments of the present disclosure have been disclosed for illustrative purposes, those skilled in the art will appreciate that various modifications and alterations are possible, without departing from the spirit of the present disclosure. It is also to be understood that such modifications and alterations are incorporated in the scope of the present disclosure and the accompanying claims.

## Claims

1. A handheld writing instrument comprising a non-aqueous writing ink which comprises, relative to the total weight of writing ink:
about 5 to about 25 wt.-%, of at least one pigment,
about 5 to about 35 wt.-% of one or more resins,
a gelling agent comprising one or more of:
e) a mixture of silica particles and of a fatty acid amide wax,
f) water-insoluble cellulose nanofibers, and
one or more solvents;
wherein the handheld writing instrument comprises a writing tip which is configured to dispense between about 50 and about 100 mg ink per 150 m of writing line;
wherein the writing ink has a viscosity at rest at about 20 °C of between about 15 000 cps and about 150 000 cps and a viscosity under shear at about 100 s⁻¹ at about 20 °C of between about between about 1200 cps and about 10000 cps; and
wherein the pigment has a D50 particle size of between about 80 nm and about 700 nm.

2. The handheld writing instrument according to claim 1, wherein the writing tip comprises a writing ball held within the writing tip and wherein a gap between the writing tip and the writing ball is between about 700 nm and about 3000 nm, more specifically between about 800 nm and about 2500 nm and in particular between about 1000 nm and about 2000 nm.

3. The handheld writing instrument according to claim 1 or claim 2, wherein the non-aqueous writing ink comprises a pigment having acidic surface groups, in particular a carbon-black based pigment, and more specifically acidic functional groups are grafted onto the pigment or are part of a compound which is coated onto the pigment surface.

4. The handheld writing instrument according to any one of claims 1 to 3, wherein the pigment has a D50 particle size of between about 100 nm and about 500 nm, in particular between about 120 nm and about 350 nm.

5. The handheld writing instrument according to any one of claims 1 to 4, wherein the pigment has a D90 particle size of less than about 1200, more specifically less than about 1000 nm and in particular less than about 900 nm.

6. The handheld writing instrument according to any one of claims 1 to 5, wherein the gelling agent comprises a mixture of silica particles and of a fatty acid amide wax and wherein the fatty acid amide wax is present in amounts of between about 0.05 and about 1 wt.-%, more specifically between about 0.08 and about 0.5% wt.-%, and in particular between about 0.1 and about 0.3% wt.-%; and/or silica particles between about 0.02 and about 1 wt.-%, more specifically between about 0.05 and about 0.7 wt.-%, and in particular between about 0.1 and about 0.5 wt.-%; relative to the total weight of the ink.

7. The handheld writing instrument according to any one of claims 1 to 6, wherein the gelling agent comprises water-insoluble cellulose nanofibers in amounts of between about 0.02 and about 0.5 wt.-%, more specifically between about 0.05 and about 0.25 wt.-%, and in particular between about 0.07 and about 0.2 wt.-%, relative to the total weight of the ink.

8. The handheld writing instrument according to any one of claims 1 to 7, wherein the water-insoluble cellulose nanofibers comprise fibers having a diameter of less than about 1000 nm, more specifically less than about 800 nm, and in particular less than about 500 nm, and/or having an aspect ratio of at least about 5, more specifically at least about 8, and in particular at least about 10.

9. The handheld writing instrument according to any one of claims 1 to 8, wherein the one or more solvents comprises a polar solvent, in particular a polar solvent selected from the group consisting of glycol ethers, alcohols, and mixture thereof; more specifically wherein the solvent is a polyethylene glycol ether, a polypropylene glycol ether, phenoxyethanol, 1-phenoxy-2-propanol, or mixtures thereof.

10. The handheld writing instrument of any one of claims 1 to 9, wherein the one or more resins comprises a resin selected from polyester resins, polyurethane resins, ketone resins, ketone-formaldehyde resins, ether resins, vinyl resins, polyvinyl alcohols, acrylic resins, styrene-acrylic resins, styrene-maleic acid copolymer resins, rosin-maleic acid copolymer resins, phenol resins, cellulosic resins, amid resins, alkyd resins, rosin modified resins, rosin modified phenol resins, xylene resins, polyacetal resins, terpene resins, phenoxy resins or a mixture thereof.

11. The handheld writing instrument of any one of claims 1 to 10, wherein the non-aqueous writing ink comprises a homo or copolymer of vinylpyrrolidone, in particular polyvinylpyrrolidone, and in particular wherein the homo or copolymer of vinylpyrrolidone is present in amounts of between about 0.02 and about 1.5 wt.-%, more specifically between about 0.03 and about 0.8 wt.-%, and in particular between about 0.05 and about 0.5 wt.-%, relative to the total weight of the ink.

12. The handheld writing instrument of any one of claims 1 to 11, wherein the non-aqueous writing ink comprises a dispersing agent.

13. The handheld writing instrument of claim 12, wherein the non-aqueous writing ink comprises a polymeric dispersing agent, in particular the polymeric dispersing agent being an alkoxylated polymer which is basic in an aqueous environment, in particular a C₁-C₄ polyalkoxylated compound comprising one or more functional groups which is basic in an aqueous environment such as amino and/or carboxylate groups.

14. The handheld writing instrument of claim 13, wherein the non-aqueous writing ink comprises a mixture of a polymeric dispersing agent and a non-polymeric dispersing agent.

15. A non-aqueous writing ink which comprises, relative to the total weight of writing ink:
about 5 to about 25 wt.-%, of at least one pigment,
about 5 to about 35 wt.-% of one or more resins,
a gelling agent comprising one or more of:
g) a mixture of silica particles and of a fatty acid amide wax,
h) water-insoluble cellulose nanofibers, and
one or more solvents;
wherein the writing ink has a viscosity at rest at about 20 °C of between about 15 000 cps and about 150 000 cps and a viscosity under shear at about 100 s⁻¹ at about 20 °C of between about between about 1200 cps and about 10000 cps; and
wherein the pigment has a D50 particle size of between about 80 nm and about 700 nm.
